# FASCICULE DE BREVET EUROPEEN

(11) **EP 0 418 134 B1**
(45) Date de publication et mention de la délivrance du brevet: **09.06.1993**
(21) Numéro de dépôt: 90402480.9
(22) Date de dépôt: 10.09.1990
(51) Int. Cl.: B60K 5/12, F16F 3/08

(54) **Support élastique, en particulier pour moteur de véhicule**
Elastisches Lager, insbesondere für einen Fahrzeugmotor
Elastic support, in particular for vehicle engine

(30) Priorité: 13.09.1989 FR 8911969
(43) Date de publication de la demande: 20.03.1991
(73) Titulaire: HUTCHINSON, F-75008 Paris (FR)
(72) Inventeur: Simon, Jean-Michel, F-92140 Clamart (FR)
(74) Mandataire: Picard, Jean-Claude Georges

(56) Documents cités:
- EP-A- 0 075 807
- DE-A- 2 603 995
- LU-A- 45 544
- US-A- 3 730 509
- PATENT ABSTRACTS OF JAPAN vol. 1, no. 101 (M-77)(2903) 8 septembre 1977, & JP-A-52 41775 (TOYOTA GOSEI KK) 31 mars 1977,

## Description

La présente invention concerne un support élastique, en particulier pour moteur de véhicule, du type comportant une première armature propre à être fixée à la structure du véhicule, une seconde armature propre à être fixée sur le moteur pour le supporter, et entre ces deux armatures un système élastique présentant une rigidité relativement faible en z, à savoir en direction verticale, et des rigidités plus élevées - pouvant être différentes l'une de l'autre - dans les deux directions transversales x et y constituant avec la précédente un système orthonormé, ledit système élastique comprenant un ensemble de plaques minces parallèles et espacées, en matériau flexible, s'étendant de façon générale transversalement à ladite direction verticale et montées de telle sorte qu'elles soient mises en flexion entre leurs extrémités.

On connaît déjà des supports élastiques de ce type, par exemple par le document US-A-3 730 509 (JÖRN).

Dans ce document, il est toujours fait mention du fait qu'une matière élastique d'amortissement s'étend entre les lames en leur étant étroitement liée (cf. col. 2, 1. 7-18 ; 30-37, etc), soit uniformément sur toute leur longueur, soit sous la forme d'un balourd amortisseur accroché au milieu des lames (figures 12, 13, 14).

Cet amortissement permanent de JÖRN induit automatiquement une rigidification dynamique du support, qui augmente avec la fréquence. Le support devient donc raide aux fréquences élevées, et l'association de cette raideur élevée et des déplacements imposés (puissance du moteur) entraîne une forte transmission des vibrations entre le moteur et ses supports, ce qui est contraire au résultat recherché.

Le but essentiel de la présente invention est de remédier à cet inconvénient, tout en conservant les qualités élastiques souhaitées en vertical, pour l'isolation acoustique des moteurs.

A cet effet, un support élastique du type général défini au début sera, conformément à l'invention, essentiellement caractérisé en ce que les extrémités des plaques précitées sont supportées par l'intermédiaire de blocs de matériau élastique superposés en élastomère, intercalés en sandwich dans lesdites extrémités des plaques, ces blocs encastrant les extrémités des plaques sans liaison rigide avec les armatures respectives.

Du fait de l'absence de toute liaison rigide telle que vis-écrou aux extrémités des plaques, on évitera efficacement la transmission latérale des vibrations, par l'intermédiaire des plaques, entre les deux armatures, à savoir, dans l'application envisagée, du moteur au véhicule. En outre, le fait que l'on utilise une simple superposition de lames à l'emplacement de leur plus grande flexion, sans matériau élastique intercalaire à ce niveau, le matériau élastique étant uniquement localisé aux extrémités en encastrement des lames, permet d'éviter l'amortissement néfaste qui a été mentionné plus haut.

Selon une caractéristique complémentaire de la présente invention, la liaison à encastrement entre les extrémités des plaques et les armatures respectives est assurée par l'intermédiaire d'une partie desdites armatures, qui enveloppe lesdites extrémités par le haut, par le bas, et préférentiellement aussi par les côtés.

Cette disposition assure un excellent assujettissement des extrémités des plaques aux armatures, sans risque de décollement du matériau élastique, avec une excellente continuité des fibres.

Dans leur forme la plus simple, ces plaques pourront être planes, rondes ou carrées, mais seront préférentiellement rectangulaires ou sensiblement rectangulaires.

Cependant ces plaques pourraient aussi être légèrement bombées, leur convexité étant dirigée vers le haut pour la compensation de la charge statique.

Quant au matériau propre à les constituer, on choisira avantageusement les matériaux composites, à savoir en résine synthétique (époxy, polyéther, etc.) armée de fibres résistantes (verre, carbone, etc.), préférentiellement orientées, et ceci majoritairement selon la grande dimension (x) des plaques.

Le taux de fibres peut être d'environ 40 % par rapport au poids total des plaques.

On voit en tout cas que ces plaques travailleront essentiellement en flexion sous l'effet des charges statiques et dynamiques du moteur et, étant suffisamment minces (épaisseur en z de l'ordre de par exemple 2 mm), elles pourront présenter une très faible raideur, c'est-à-dire une grande flexibilité, dans cette direction. Pour un moteur de véhicule, la raideur globale des plaques pourra être de l'ordre de 150 N/mm.

On comprend que les raideurs en x et en y pourront être toutes les deux beaucoup plus fortes qu'en z, du fait de l'orientation générale horizontale des plaques. Il conviendra cependant de faire en sorte que les blocs de matériau élastique qui les supportent à leurs extrémités et qui travaillent en cisaillement dans le plan horizontal soient eux-mêmes très raides dans ce plan, tout en ayant de préférence un effet amortissant.

Par ailleurs, l'invention permettra de conserver les qualités physiques inhérentes aux matériaux composites des types mentionnés plus haut, à savoir une excellente tenue vis-à-vis du fluage, de la corrosion et de la fatigue.

L'invention comprend aussi différentes dispositions concernant les butées qu'il convient de prévoir pour limiter de chaque côté le débattement vertical des plaques.

Ces dispositions, ainsi que celles qui ont déjà été expliquées, seront mieux vues à la lecture de la description suivante de plusieurs exemples, non limitatifs, de réalisation de supports élastiques conformes à l'invention.

Référence sera faite au dessin ci-annexé dans lequel :
- la **figure 1** est une vue en demi-coupe axiale, dans le plan z o x, d'un support conforme à l'invention, la première armature possédant une partie enveloppante à rebord de rigidification et d'encastrement des plaques ;
- la **figure 2** montre, également en coupe partielle z o x, une variante dans laquelle ce rebord porte l'une des butées ;
- la **figure 3** est une vue en coupe, dans le plan z o y, du support de la figure 2 ;
- la **figure 4** est une vue partielle en coupe horizontale dans le plan x o y, du même support, selon la ligne IV-IV de la figure 2 ;
- la figure 5 est une vue en coupe axiale, dans le plan z o x, d'un autre mode de réalisation d'un support élastique conforme à l'invention ;
- la figure 6 est une vue en coupe transversale, dans le plan z o y, du même support ;
- la figure 7 est une vue en coupe axiale d'encore une autre variante de support ; et
- la figure 8 montre en coupe partielle un détail de l'encastrement.

Sur les différentes figures, les mêmes références ont été utilisées pour désigner les mêmes parties du support, ou des parties analogues ou jouant le même rôle, à savoir :
la référence 1 désigne les plaques minces, parallèles et espacées, en matériau composite flexible, qui assurent, en vertical, la grande flexibilité souhaitée du support. Sur toutes les figures le nombre de ces plaques est de trois, mais il peut bien entendu être différent, en particulier en fonction du poids du moteur qu'il est destiné à supporter.

La référence 2 désigne la première armature, propre à être fixée à la structure du véhicule.

Les références 3-3' désignent la seconde armature, propre à être fixée sur le moteur pour le supporter.

La référence 4 désigne les blocs de matériau élastique (élastomère) superposés, intercalés en sandwich dans les extrémités des plaques qu'elles encastrent, pour leur fixation à l'armature 2 sans aucune liaison rigide, ces blocs étant adhérisés aux plaques et à cette armature.

La référence 5 désigne le même type de blocs, fixés de la même manière entre les extrémités opposées des plaques et l'armature 3-3'.

Les particularités des différents modes de réalisation, notamment quant à la disposition des butées, sont maintenant les suivantes.

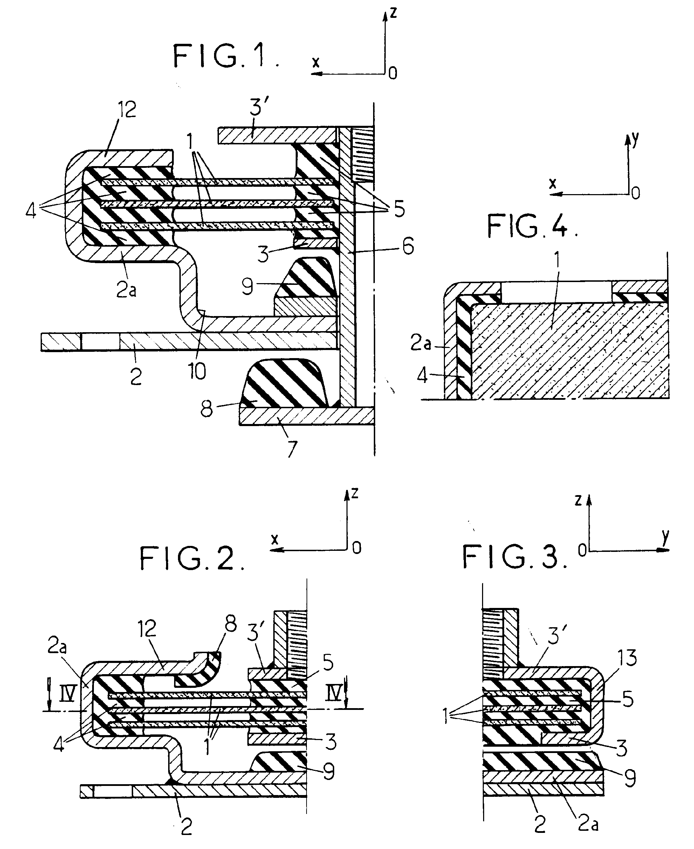

Dans le mode de réalisation de la figure 1, on voit que l'armature 3 - 3' est traversée axialement par une pièce d'ancrage 6 servant de support aux blocs 5 ainsi qu'à une coupelle inférieure 7 supportant une butée en élastomère éventuellement amortissante 8. Il s'agit ici d'une butée dite "de traction", car elle sert à limiter les débattements verticaux du moteur vers le haut.

Une butée analogue de compression est représentée en 9. En servant d'arrêtoir à la partie 3 de l'armature solidaire du moteur, elle limitera les débattements verticaux de celui-ci vers le bas. Pour permettre à ces débattements une certaine amplitude, la butée 9 est disposée dans une partie creusée 10 de l'armature 2a fixée sur l'armature 2.

Cette autre armature 2a comporte un rebord périphérique 12 enveloppant, dans lequel les extrémités des plaques 1 sont encastrées, avec interposition des blocs d'élastomère 4. Cette disposition assure une grande rigidité dans la direction de l'axe x, sans nuire à la souplesse du support en direction verticale. Des rabats (non représentés) aux extrémités du rebord 12 permettent également d'augmenter la rigidité dans la direction de l'axe des y.

Dans le mode de réalisation de la figure 2, on a montré la possibilité d'établir la butée de traction 8 sur le rebord 12 de l'armature 2a, ce qui évite l'axe traversant 6 du mode de réalisation de la figure 1 et l'affaiblissement des plaques 1 de matériau composite par perçage.

Dans ce cas, comme représenté à la figure 3, l'accrochage du moteur sur le support est réalisé à l'aide d'une tôle enveloppante 13, sans axe traversant.

On a montré en outre, sur les figures 2 et 3, la butée de compression 9 propre à coopérer avec la partie 3 de l'armature 13 solidaire du moteur.

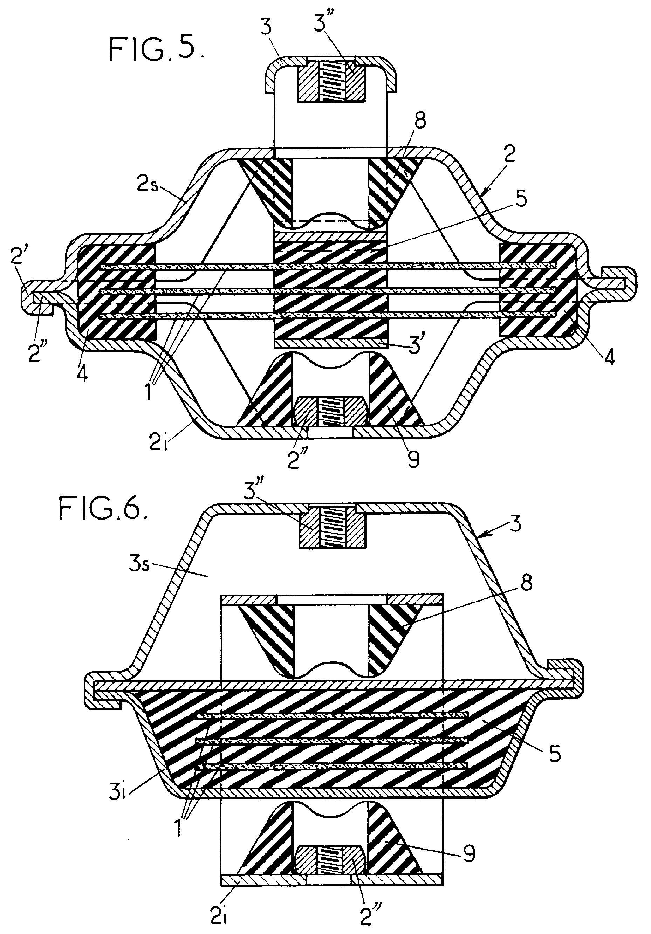

Dans le mode de réalisation des figures 5 et 6, la première armature 2 destinée à être fixée à la structure du véhicule est constituée de deux demi-coquilles en tôle pliée, supérieure 2s et inférieure 2i, serties l'une sur l'autre par leurs bords 2' et 2''. Ces bords enserrent ainsi entre eux, lors du sertissage, les blocs 4 d'élastomère d'ancrage des extrémités des plaques flexibles 1, dont l'ensemble est fabriqué séparément.

Quant à la seconde armature 3 de fixation au moteur, elle est constituée également de deux demi-coquilles en tôle pliée 3s et 3i serties par leurs bords et contournant l'armature 2 ; lors du sertissage, la demi-coquille inférieure fermée 3i comprime la masse d'élastomère centrale 5, permettant ainsi d'établir la liaison avec la partie centrale des plaques 1. Sur les figures 5 et 6, on a représenté aussi, en 2'' et 3'', des écrous soudés, respectivement sur les demi-coquilles 2i et 3s, pour permettre les liaisons avec la structure du véhicule d'une part, et le moteur d'autre part.

L'armature 2 comporte par ailleurs intérieurement, de part et d'autre de la demi-coquille fermée 3i, des butées en élastomère 8 et 9 propres à limiter les déplacements verticaux, dans les deux sens, de l'armature 3 par rapport à l'armature 2.

On obtient ainsi un mode de réalisation extrêmement simple et économique, présentant globalement les mêmes fonctions que les autres modes de réalisation déjà décrits.

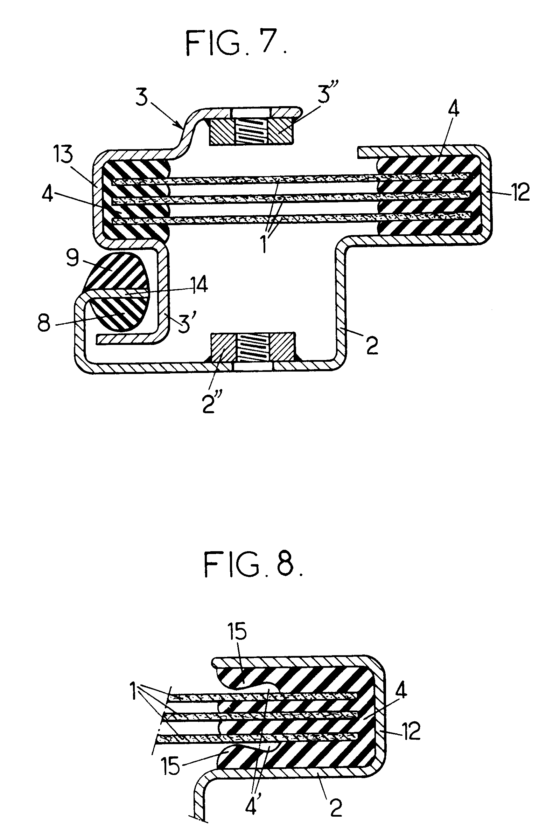

Le mode de réalisation décrit avec référence à la figure 7 est encore plus simple, puisqu'il ne comporte plus que deux armatures 2 et 3 constituées chacune d'une simple tôle pliée et montées en porte-à-faux, sans liaison à la partie centrale des plaques 1. Les extrémités de ces plaques sont encastrées dans des blocs d'élastomère 4 enserrés dans des feuillures intérieures 12 et 13 correspondantes de ces armatures. Les butées de compression 9 et de traction 8 peuvent être disposées de différentes façons, par exemple dans une feuillure extérieure 3' de l'armature 3, en étant adhérisées de part et d'autre d'un rebord rentrant 14 de l'armature 2. Quant aux boulons 2'' et 3'', ils ont le même rôle que dans le mode de réalisation précédent. Il est à noter que les plaques 1 peuvent être mises en précontrainte, pour compenser la charge statique du moteur.

A la figure 8, enfin, on a représenté un détail d'encastrement avantageux, qui peut être mis en oeuvre dans tous les modes de réalisation susdécrits : des échancrures 4' sont ménagées entre les plaques 1 et les blocs d'élastomère 4 ; cet élastomère est prolongé jusqu'au bord de la tôle d'enveloppement 2, formant ainsi un talon 15.

Pour un régime de ralenti du moteur, le support ne subit aucune charge en dehors de la charge statique du moteur ; la raideur est faible, de même que la transmission des vibrations et des bruits. Sous couple, les plaques 1 viennent en appui sur l'un ou l'autre des talons 15, leur longueur libre diminue et leur raideur augmente ; on obtient donc à la fois l'avantage d'une faible raideur au ralenti et d'une raideur augmentée sous couple, qui permet de limiter alors les débattements, avec conservation d'un jeu notable entre les butées.

## Revendications

1. Support élastique, en particulier pour moteur de véhicule, du type comportant une première armature (2) propre à être fixée à la structure du véhicule, une seconde armature (3) propre à être fixée sur le moteur pour le supporter, et entre ces deux armatures un système élastique présentant une rigidité relativement faible en z, à savoir en direction verticale, et des rigidités plus élevées - pouvant être différentes l'une de l'autre - dans les deux directions transversales x et y constituant avec la précédente un système orthonormé, ledit système élastique comprenant un ensemble de plaques minces parallèles et espacées, en matériau flexible, s'étendant de façon générale transversalement à ladite direction verticale et montées de telle sorte qu'elles soient mises en flexion entre leurs extrémités, caractérisé en ce que ces extrémités des plaques sont supportées par l'intermédiaire de blocs de matériau élastique (4) superposés en élastomère, intercalés en sandwich dans lesdites extrémités des plaques, ces blocs encastrant les extrémités des plaques sans liaison rigide avec les armatures respectives.

2. Support selon la revendication 1, caractérisé en ce que la liaison à encastrement entre les extrémités des plaques (1) et les armatures respectives (2, 3) est assurée par l'intermédiaire d'une partie (12, 13) desdites armatures, gui enveloppe lesdites extrémités par le haut, par le bas, et préférentiellement aussi par les côtés.

3. Support selon la revendication 1 ou 2, caractérisé en ce que lesdites plaques (1) sont planes.

4. Support selon la revendication 1 ou 2, caractérisé en ce que lesdites plaques (1) sont légèrement bombées, leur convexité étant dirigée vers le haut pour la compensation de la charge statique.

5. Support selon l'une quelconque des revendications précédentes, caractérisé en ce que lesdites plaques (1) sont en matériau composite, à savoir en une résine synthétique armée de fibres résistantes.

6. Support selon la revendication 5, caractérisé en ce que lesdites fibres sont orientées majoritairement selon la grande dimension (x) des plaques.

7. Support selon l'une quelconque des revendications précédentes, caractérisé en ce que, les plaques sont sensiblement rectangulaires.

8. Support selon l'une quelconque des revendications précédentes, caractérisé en ce qu'il comporte une butée de compression (9) pour la limitation des débattements verticaux du moteur vers le bas, et une butée de traction (8) pour la limitation des débattements verticaux du moteur vers le haut, ces butées étant constituées d'au moins un bloc en élastomère, de préférence amortissant.

9. Support selon la revendication 8, caractérisé en ce que ladite butée de traction (8) est solidarisée de l'extrémité inférieure d'une structure traversante (6) servant de pièce d'ancrage du moteur, elle-même solidarisée de ladite seconde armature (3, 3'), cette butée étant disposée de sorte à être arrêtée par ladite première armature (2) lors des débattements du moteur vers le haut, pour en limiter l'amplitude.

10. Support selon la revendication 8, caractérisé en ce que ladite butée de traction (8) est montée sur un rebord (12) d'encastrement des plaques (1) et de rigidification d'une armature (2a) solidaire de ladite première armature (2).

11. Support selon la revendication ou 10, caractérisé en ce que ladite butée de compression (9) est portée par ladite première armature (2, 2a), de sorte à servir d'arrêtoir à ladite seconde armature (3) lors des débattements du moteur vers le bas, pour en limiter l'amplitude.

12. Support selon l'une quelconque des revendications 1 à 8, caractérisé en ce que ladite première armature (2) est constituée de deux demi-coquilles en tôle pliée (2i, 2s) serties l'une sur l'autre par leurs bords (2', 2''), en enserrant entre elles lesdits blocs de matériau élastique (4) aux extrémités des plaques, et en ce que ladite seconde armature (3) est également constituée de deux demi-coquilles en tôle pliée (3i, 3s) serties l'une sur l'autre par leurs bords en contournant la première armature (2), la demi-coquille inférieure (3i) contenant une masse d'élastomère centrale (5) assurant la liaison avec la partie centrale desdites plaques flexibles (1).

13. Support selon l'une quelconque des revendications 1 à 8, caractérisé en ce que lesdites première (2) et seconde (3) armatures sont constituées chacune d'une simple tôle pliée présentant deux feuillures (12, 13) se faisant vis-à-vis pour la réception des blocs élastiques d'encastrement respectifs (4) desdites plaques (1), réalisant ainsi un montage en porte-à-faux, sans liaison à la partie centrale des plaques (1).

14. Support selon l'une quelconque des revendications précédentes, caractérisé en ce que les blocs élastiques d'encastrement (4) présentent, à proximité des extrémités des plaques (1) correspondantes, des échancrures (4'), le matériau élastique étant prolongé jusqu'au bord de la partie d'encastrement de l'armature correspondante, formant ainsi un talon (15) espacé de la plaque adjacente supposée au repos.

## Patentansprüche

1. Elastisches Lager, insbesondere für Fahrzeugmotoren, das aus einer ersten Armatur (2), die am Aufbau des Fahrzeuges befestigbar ist und einer zweiten Armatur (3), die am Motor befestigbar ist, um diesen abzustützen sowie einem zwischen den beiden Armaturen befindlichen elastischen System besteht, das eine verhältnismäßig geringe Steifigkeit in Richtung der senkrecht verlaufenden Achse (z) und erhöhte Steifigkeiten -die voneinander verschieden sein können- in Richtung der beiden quer verlaufenden Achsen (x und y) aufweist, die mit der vorstehend erwähnten Achse ein orthonormiertes System bilden, wobei das elastische System aus einer Anordnung von dünnen, parallelen und im Abstand voneinander angeordneten Platten aus biegsamem Material besteht, die sich allgemein quer zu der Senkrechten erstrecken und so montiert sind, daß sie zwischen ihren Endabschnitten durchgebogen werden, dadurch gekennzeichnet, daß die Enden der Platten durch aus einem Elastomer bestehende, übereinander angeordnete Blöcke (4) aus elastischem. Material abgestützt werden, die sandwichartig zwischen den Enden der Platten eingeschoben sind, wobei die Blöcke die Enden der Platten ohne starre Verbindung mit den entsprechenden Armaturen einspannen.

2. Lager nach Anspruch 1, dadurch gekennzeichnet, daß die Einspannverbindung zwischen den Enden der Platten (1) und den entsprechenden Armaturen (2, 3) durch einen Abschnitt (12, 13) der Armaturen sichergestellt wird, der die Enden nach oben und unten zu und vorzugsweise auch an den Seiten umgibt.

3. Lager nach den Ansprüchen 1 oder 2, dadurch gekennzeichnet, daß die Platten (1) eben sind.

4. Lager nach den Ansprüchen 1 oder 2, dadurch gekennzeichnet, daß die Platten (1) leicht gewölbt sind, wobei ihre Wölbung nach oben gerichtet ist, um die statische Belastung zu kompensieren.

5. Lager nach einem der vorhergehenden Ansprüche, dadurch gekennzeichnet, daß die Platten (1) aus einem zusammengesetzten Material, nämlich einem mit widerstandsfähigen Fasern verstärktem Kunstharz bestehen.

6. Lager nach Anspruch 5, dadurch gekennzeichnet, daß die Mehrzahl der Fasern gemäß. der großen Abmessung (x) der Platten orientiert ist.

7. Lager nach einem der vorhergehenden Ansprüche dadurch gekennzeichnet, daß die Platten etwa rechteckig sind.

8. Lager nach einem der vorhergehenden Ansprüche, dadurch gekennzeichnet, daß es einen Druckanschlag (9) zur Begrenzung der senkrechten Schwingungen des Motors nach unten und einen Zuganschlag (8) zur Begrenzung der senkrechten Schwingungen des Motors nach oben enthält, wobei die Anschläge aus wenigstens einem Block aus elastomerem, vorzugsweise dämpfenden Material bestehen.

9. Lager nach Anspruch 8, dadurch gekennzeichnet, daß der Zuganschlag (8) am unteren Ende einer durchgehenden Stütze (6) angebracht ist, die als Verankerung für den Motor dient und ihrerseits an der zweiten Armatur (3, 3') befestigt ist, wobei der Anschlag so angeordnet ist, daß er durch die erste Armatur (2) arretiert wird, wenn Schwingungen des Motors nach oben auftreten, um dadurch deren Amplitude zu begrenzen.

10. Lager nach Anspruch 8, dadurch gekennzeichnet, daß der Zuganschlag (8) an einem umgebogenen Rand (12) der Einspannung für die Platten (1) und zur Versteifung einer Armatur (2a) angebracht ist, die fest mit der ersten Armatur (2) verbunden ist.

11. Lager nach Anspruch 9 oder 10, dadurch gekennzeichnet, daß der Druckanschlag (9) sich auf der ersten Armatur (2, 2a) abstützt, derart, daß er, wenn Schwingungen des Motors nach unten auftreten, gegen die zweite Armatur (3) anschlägt, um so deren Amplitude zu begrenzen.

12. Lager nach einem der vorhergehenden Ansprüche 1 bis 8, dadurch gekennzeichnet, daß die erste Armatur (2) aus zwei Halbschalen (2i, 2s) aus einem gebogenen Blech besteht, die an ihren Rändern (2', 2'') durch Bördeln miteinander verbunden sind und zwischen diesen die Blöcke (4) aus elastischem Material mit den Enden der Platten verspannt sind und daß die zweite Armatur (3) ebenfalls aus zwei Halbschalen aus einem gebogenen Blech (3i, 3s) besteht, die ebenfalls an ihren Rändern durch Bördeln miteinander verbunden sind, und um die zweite Armatur (2) herumgeführt sind, wobei die untere Halbschale (3i) eine mittlere Masse (5) aus elastomerem Material enthält, die die Verbindung mit dem mittleren Teil der biegsamen Platten (1) sicherstellt.

13. Lager nach einem der vorhergehenden Ansprüche 1 bis 8, dadurch gekennzeichnet, daß die erste Armatur (2) und die zweite Armatur (3) jeweils aus einem einfachen gebogenen Blech, mit zwei sich gegenüberliegenden Rinnen oder Falzen (12, 13) zur Aufnahme der entsprechenden elastischen Einspannblöcke (4) der Platten (1) bestehen, wodurch eine fliegende Montage ohne Verbindung mit dem mittleren Teil der Platten (1) realisiert wird.

14. Lager nach einem der vorhergehenden Ansprüche, dadurch gekennzeichnet, daß die elastischen Einspannblöcke (4) in der Nähe der Enden der entsprechenden Platten (1) Kerben (4') aufweisen, wobei das elastische Material, das bis zum Rand des Einspannabschnittes der entsprechenden Armatur verlängert ist, auf diese Weise einen Ansatz (15) bildet, der im Ruhezustand von der daneben liegenden oberen Platte im Abstand liegt.

## Claims

1. Elastic mount, in particular for a vehicle engine, of the type comprising a first brace suitable for being fixed to the structure of the vehicle, a second brace suitable for being fixed to the engine to support it, and between these two braces an elastic system having relatively weak rigidity in the z direction, namely in the vertical direction, and higher rigidities - which can be different from one another - in the two transverse directions x and y constituting with the preceding one an orthonormal system, the said elastic system comprising a set of thin parallel plates spaced apart, made from flexible material, lying generally transversely to the said vertical direction, and mounted so that they are put under flexion between their ends, characterised in that the ends of these plates are supported by superimposed blocks of elastic elastomeric material (4), inserted as a sandwich in the said ends of the plates, these blocks embedding the ends of the plates without rigid connection to the respective braces.

2. Mount according to Claim 1, characterised in that the embedded connection between the ends of the plates (1) and the respective braces (2, 3) is provided through a part (12, 13) of the said braces, which encloses the said ends at the top, at the bottom, and preferably also at the sides.

3. Mount according to Claim 1 or 2, characterised in that said plates (1) are flat.

4. Mount according to Claim 1 or 2, characterised in that said plates (1) are slightly domed, their convexity being directed upwards to compensate for the static load.

5. Mount according to any one of the preceding claims, characterised in that the said plates (1) are made from composite material, namely a synthetic resin reinforced with strong fibres.

6. Mount according to Claim 5, characterised in that the said fibres are oriented mainly along the large dimension (x) of the plates.

7. Mount according to any one of the preceding claims, characterised in that the plates are substantially rectangular.

8. Mount according to any one of the preceding claims, characterised in that it comprises a compression buffer (9) for limiting the vertical downward movements of the engine, and a traction buffer (8) for limiting the vertical upward movements of the engine, these buffers being formed from at least one block of elastomer, preferably shock absorbing.

9. Mount according to Claim 8, characterised in that the said traction buffer (8) is fastened to the lower end of a cross structure (6) serving as an anchoring part for the engine, itself fastened to the said second brace (3, 3'), this buffer being arranged so as to be stopped by the said first brace (2) during upward movements of the engine, to limit the amplitude thereof.

10. Mount according to Claim 8, characterised in that the said traction buffer (8) is mounted on a shoulder (12) for embedding the plates (1) and for rigidifying a brace (2a) fixed to the said first brace (2).

11. Mount according to Claim 9 or 10, characterised in that the said compression buffer (9) is borne by the said first brace (2m 2a), so as to serve as a stop for the said second brace (3) during the downward movements of the engine, to limit the amplitude thereof.

12. Mount according to any one of Claims 1 to 8, characterised in that the said first brace is formed by two half-shells of folded sheet metal (2i, 2s) crimped to one another through their edges (2', 2''), gripping between them said blocks of elastic material (4) at the ends of the plates, and in that the said second brace (3) is also formed by two half-shells of folded sheet metal (3i, 3s) crimped to one another through their edges, skirting the said first brace (2), the lower half-shell (3i) containing a central elastomeric mass (5) providing the connection to the central part of the said flexible plates (1).

13. Mount according to any one of Claims 1 to 8, characterised in that the said first (2) and second (3) braces are each formed by a single folded metal sheet having two rebates (12, 13) facing each other for receiving the respective elastic blocks (4) for embedding the said plates (1), thus forming a cantilever assembly, without connection to the central part of the plates (1).

14. Mount according to any one of the preceding claims, characterised in that the elastic embedding blocks (4) have indentations (4'), close to the ends of the corresponding plates (1), the elastic material being extended up to the edge of the embedding part of the corresponding brace, thus forming a heel (15) spaced apart from the adjacent plate, which is assumed to be at rest.
